# EUROPEAN PATENT APPLICATION

(11) **EP 3 656 340 A1**
(43) Date of publication of application: **27.05.2020**
(21) Application number: 18208068.9
(22) Date of filing: 23.11.2018
(51) Int. Cl.: A61C 5/62

(54) **APPLICATION DEVICE AND METHOD FOR PRODUCING AN APPLICATION DEVICE**

(71) Applicant: Sulzer Mixpac AG, 9469 Haag (Rheintal) (CH)
(72) Inventor: TIEKENHEINRICH, Lars, 24147 Kiel (DE); PRECKL, Markus, 9434 Au (CH)
(74) Representative: Manitz Finsterwald Patent- und Rechtsanwaltspartnerschaft mbB

(57) **Abstract**

The present invention is related to an application device (10), in particular for dental compounds, comprising a housing (20) and an application tool (70), the housing (20) comprising an outlet channel (30) extending through the housing (20) from a first end (32) of the outlet channel (30) to a second end (34) of the outlet channel (30), and the application tool (70) comprising an outlet opening (74) being connected to the outlet channel (30). The present invention is further related to a method for producing an application device (10).

## Description

The present invention relates to an application device, in particular for dental compounds, comprising a housing and an application tool, the housing comprising an outlet channel extending through the housing from a first end of the outlet channel, the second end of the outlet channel and the application tool comprising an outlet opening being connected to the outlet channel. Further, the present invention relates to a method for producing an application device.

Application devices for the application of fluids are commonly used. Such application devices can be used with liquid fluids and gaseous fluids. Application devices often are connected to discharging devices, providing different ways of application, for instance in terms of application area and/or distribution. Especially for an application of dental compounds it is known to use such application devices.

Especially in a medical environment, for instance for the aforementioned application of dental compounds, application devices are changed often, especially after each single usage or at least before the treatment of the next patient. This results in a high consumption of application devices.

In view of the above, it is an object of the present invention to provide an improved application device and an improved method for producing such an application device. In particular, it is an object of the invention to provide an application device and a method for producing such an application device which allow an especially easy, fast and cheap way to produce application devices in huge numbers.

This objective is solved by the patent claims. In particular, this objective is solved by an application device according to claim 1 and by a method for producing an application device according to claim 14. The dependent claims describe preferred embodiments of the invention.

In a first aspect of the invention the object is satisfied by an application device, in particular for dental compounds, comprising a housing and an application tool, the housing comprising an outlet channel extending through the housing from a first end of the outlet channel to a second end of the outlet channel, and the application tool comprising an outlet opening being connected to the outlet channel. An application device according to the invention is characterized in that the housing comprises two separate housing sections which are connected to each other to build the housing and the outlet channel; further that the application tool is distinct from each of the housing sections and comprises a connection section which is fixedly arranged in the outlet channel, wherein the connection section comprises an application channel connecting the outlet channel with the outlet opening; further that the housing comprises connecting means arranged at the first end of the outlet channel, the connecting means being configured to connect the application device to an outlet port of a discharging device, in particular by inserting the connecting means into the outlet port of the discharging device; and further that the housing comprises a shielding section standing apart from the outlet channel and surrounding the outlet channel, wherein the shielding section extends beyond the first end of the outlet channel in the direction of the outlet channel.

An application device according to the invention can be used to applicate fluids, especially liquids and gases, onto a target surface. Especially, an application device according to the invention can be used for dental compounds. For the application of these fluids an application device according to the invention comprises a housing and an application tool, wherein the housing comprises an outlet channel extending through the housing and the application tool comprising an outlet opening being connected to the outlet channel. This allows guiding the fluid through the housing from a first end of the outlet channel to a second end of the outlet channel and via the outlet opening of the application tool and to applicate the fluid onto the target surface. In other words, the fluid to be applicated enters the housing and especially the outlet channel through the first end of the outlet channel, is guided through the outlet channel to the second end of the outlet channel and after that to the outlet opening of the application tool, which is in fluid communication with the outlet channel.

According to the invention, an application device essentially comprises three parts, two separate housing sections and the application tool. The two separate housing sections are connected to each other to build the housing and at the same instance the outlet channel. Preferably, each of the housing sections can comprise a part of the outlet channel, in particular a half of the outlet channel preferably in respect to the longitudinal direction of the outlet channel between the first end of the outlet channel and the second end of the outlet channel. By connecting the two separate housing sections, the outlet channel is completed. Separate housing sections in the scope of the invention can also be manufactured in a single step and may be connected by a hinge section, especially an integral hinge.

Distinct from each of the housing sections, an application tool is provided. This application tool comprises a connection section for a secure fixing of the application tool in the outlet channel of the housing. Especially, the connection section comprises an application channel to provide a connection between the outlet channel of the housing and the outlet opening of the application tool. In other words, the application channel extends through the application tool and connects the outlet channel of the housing with the outlet opening of the application tool in a fluid communicating way.

All three parts of the application device, the two separate housing sections and the application tool, are easy to produce, for instance by using injection molding. Therefore, the production of the application device as a whole can be provided in a fast and easy way resulting in a reduction of production cost.

By inserting the application tool into the outlet channel, especially at its second end, the application tool is automatically fixed into the outlet channel and therefore into the housing. For instance, adapted grooves, tongues and/or undercuts can be provided, both in the outlet channel and in the application tool, respectively. No further fixing means are necessary and hence production cost of the application device as a whole can be lowered further.

Additionally, the housing comprises connecting means arranged at the first end of the outlet channel. These connecting means are configured to connect the application device as a whole to an outlet port of a discharging device. This discharging device can provide the fluid to be applicated. In particular, the connecting means arranged at the first end of the outlet channel can be inserted into an outlet port of the discharging device and therefore providing a secure fixing of the application tool onto the discharging device and simultaneously providing a connection of the outlet port of the discharging device to the first end of the outlet channel. Additionally, the contacting means at the first end of the outlet channel can be integrally arranged at the first end of the outlet channel. In other words, the contacting means are build up using parts of the first end of the outlet channel.

Further on, the housing comprises the shielding section, wherein this shielding section stands apart from the outlet channel and surrounds the outlet channel. The shielding section is an element of an application device according to the invention distinct of the outlet channel and especially never physically touching the outlet channel although surrounding it. Therefore the outlet channel is shielded by the shielding section from direct contact, especially manual direct contact. Additionally, this shielding section extends beyond the first end of the outlet channel in the direction of the outlet channel. In the scope of the invention, in the direction of the outlet channel represents the general direction of the outlet channel, especially at its first end. In other words, the outlet channel ends with its first end surrounded by the shielding section of the housing and for instance if the application devices is placed on a surface, only the shielding section is touching the surface and the first end of the outlet channel is set back in respect to the surface. In other words, the first end of the outlet channel is recessed and therefore protected. A manual contact to the first end of the outlet channel is prohibited and a risk of contamination, especially of the fluid to be applicated, can be lowered.

In summary, an application device according to the invention can be produced in a fast, easy and cheap way. Production in huge numbers of an application device according to the invention can therefore be easily provided. Additionally, by providing the connecting means at the first end of the outer channel, a connection of the application device to a discharging device can be provided easily. Further on, the shielding section of the housing, which extends in the general direction of the outlet channel beyond the first end of the outlet channel, protects the first end of the outlet channel and therefore provides an improved shielding against contamination.

Further, an application device according to the invention is characterized in that the outlet channel has a curved or kinked configuration. A curved or a kinked configuration of the outlet channel according to the invention especially means that the direction of the outlet channel present at the first end of the outlet channel is different to the direction of the outlet channel present at its second end. In the curved configuration, the outlet channel comprises a smooth change of its direction between its first end and its second end, especially in a change area. In contrast to that, in kinked configuration the change of direction is provided as a kink located in the change area. In both configurations, the remaining parts of the outlet channel outside of the change area are preferably linear and/or straight. This allows to reach target surfaces with the application device which otherwise, especially with a completely straight outlet channel in the application device, cannot be reached. Especially for dental compounds this allows to reach all areas within the mouth of a patient easily.

Further on, the application device according to the invention can be characterized in that the outlet channel comprises two linear channel sections which run obliquely to each other. Linear channel sections can be produced especially easily, in particular in an injection molding process. By arranging the two linear channel sections such that they run obliquely to each other, a kinked configuration of the outlet channel as a whole can be provided especially easily. Obliquely according to the invention especially means an angle between the two linear channel sections of 10° to 80°, especially 20° to 60°, preferably 30°.

In an improved embodiment of the invention the application device can be characterized in that the two linear channel sections define a proximal channel section and a distal channel section and wherein the connection section of the application tool is arranged in the distal channel section, and in particular only in the distal channel section. For instance, the distal channel section can be arranged at the second end of the outlet channel, the proximal channel at the first end of the outlet channel. By arranging the connection section of the application tool in the distal channel section it can be provided that also the connection section of the application tool can be linear and straight. Hence, the connection section has not to follow the oblique connection section of the linear channel sections. Therefore, the production of the connection section and of the application tool as a whole can be provided in a more easy way.

Further on, the application device according to the invention can be characterized in that the connecting means comprises a sealing surface for engaging a correspondent sealing area of the discharging device for providing the sealing. Such a sealing is provided by a sealing surface of the connecting means together with the correspondent sealing area of the discharging devices and provides two main advantages. First of all, the fluid to be applicated cannot leak out of the connection area between the first end of the outlet channel and the outlet port of the discharging device. Secondly, also no other fluid can enter into the fluid to be applicated and therefore a contamination of the fluid to be applicated can be prohibited or at least lowered.

Further on, the application device according to the invention can be characterized in that the part of the outlet channel holding the connection section of the application tool has a diameter which is greater than the diameter of the outlet channel in its remaining part. By providing two different diameters in the outlet channel, wherein the diameter of the outlet channel holding the connection section is greater than the diameter of the outlet channel in its remaining part, choosing the size of the connection size of the application tool independent of the diameter of the outlet channel in the housing can be provided. This enables to choose each of the two diameters to be adapted for its purpose, the diameter of the holding part of the outlet channel to securely fix the connection section of the application tool, and the diameter of the remaining part to channel the fluid to be applicated.

Preferably, an application device according to the invention can be characterized in that the diameter of the application channel is identical to the diameter of the part of the outlet channel not holding the connection section of the application tool. Identical diameters in the scope of the present invention also include essentially identical diameters, especially diameters, which only differ from each other within small tolerances, preferably production tolerances. In other words, the resulting channel between the outlet opening in the application tool and the first end of the outlet channel in the housing build up by the application channel in the application tool and the remaining part of the outlet channel in the housing comprises the same and diameter, which is preferably constant. Especially, no jump in the size of the diameter at the transition from the outlet channel to the application channel is present. An especially constant and unobstructed flow of the fluid to be applicated throughout the whole application device can therefore be provided.

Further on, an application device according to the invention can be characterized in that each of the housing sections is configured as a half shell, wherein in particular the half shells are designed essentially mirror-symmetrical. As a half shell, the two housing sections are at least roughly of the same size. Especially, if the outlet channel is provided in the center of the housing, each of the housing section comprises also half of the outlet channel, the outlet channel halfed along its longitudinal direction. As the two housing sections are at least roughly of the same size, an especially solid and firm housing can be provided if the housing sections are connected. Essentially mirror-symmetrical in the scope of the present invention means especially, that the half shells provide only minor deviations from complete mirror-symmetrical half shells and/or deviations irrelevant for the functionality of the application device, for instance differences on the outside of the half shells in respect to the outlet channel, which is provided on the inside, or for instance groove and tan connectors provided to connect the two housing sections.

Further on, an application device according to the invention can be characterized in that the connection section is configured as a shaft of the application tool, in particular as a rear shaft. The shaft on the scope of the invention means especially that the connection section is formed in an essential cylindrical way. An integration of the connection section into the outlet channel can therefore be provided especially easily.

In addition, an application device according to the invention can be characterized in that the housing sections and/or the application tool are made of plastic, wherein preferably the materials of the housing sections are identical and/or the material of the application tool is different from the material of the housing sections, in particular softer than the material of the housing sections. Plastic is an especially light-weight material and additionally easy in its handling. For different fluids to be applicated, different sorts of plastic are suitable and available and therefore a range of fluids to be applicated with an application device according to the invention can be extended. Also the production of an application device wherein the material used to produce the housing sections and/or the application tool is plastic can be provided more easily, especially if an injection molding process is used to produce the housing sections and/or the application tool. By using an identical material for both of the housing sections a housing build up throughout by the same material can be provided. An especially rigid material can preferably be used to build up the housing. Further, using the same material can lead to lower production costs due to a reduction in supply inventory. A different material for the application tool, especially different from the material used for the housing sections, allows to choose the material for the application tool for instance to provide a good contact to the target surface which especially can be the tool of a patient. By using an especially soft material for the application tool a harming of the target surface can be prohibited.

In this connection it should be noted that a soft plastic may be a plastic having a hardness measured with the Shore A Durometer selected in the range of 20A to 95A and up to a hardness measured with the Shore D Durometer of 55D. Typical examples of soft plastics are TPEs (thermoplastic elastomers or thermoplastic rubbers). TPEs typically have a hardness measured on the "A" scale from 20 Shore "A" to 95 Shore "A", with some harder TPE materials, i.e. materials harder than 90 Shore "A" typically being measured on the "D" scale up to a hardness of 55D.

Additionally, the application device according to the invention can be characterized in that the application tool has an application tip provided at the distal end of the connection section. By providing such an application tip, the application itself can be improved. The application tip can provide for instance a sponge- or brush-like structure and/or distribution channels. Especially, such an application tip can be adapted to the fluid to be applicated and/or to the target surface.

Further on, the application device according to the invention can be characterized in that the housing sections are sealingly connected to each other. Especially, the outlet channel as part of the housing sections and the housing can be provided in a fluid-tight way. A leaking of the fluid to be applicated out of the outlet channel and also a contamination of the fluid to be applicated can be prohibited.

The application device according to the invention can further be improved, wherein the connection section of the application tool is sealingly arranged in the outlet channel. The area of arranging of the connection section of the application tool into the outlet channel is another possible region, where the fluid to be applicated can leak and/or be contaminated. By sealingly arranging the connection section of the application tool into the outlet channel leaking of the fluid to be applicated or an entering of contaminations into the fluid to be applicated can be prohibited.

According to a second aspect of the invention the objective can be solved by a method for producing an application device according to the first aspect of the invention. A method according to the invention is characterized by the following steps:
providing the two separate housing sections and the application tool; inserting the connection section of the application tool in one of the housing sections;
connecting the two housing sections with each other to build the housing and the outlet channel thereby fixing the connection section of the application tool in the outlet channel;
sealing the connection between the two housing sections, for instance by welding or gluing.

By using a method for producing an application device according to the second aspect of the invention, an application device according to the first aspect of the invention is produced. Therefore, all advantages described in detail with respect to an application device according to the first aspect of the invention can be provided.

The first step of the method according to the invention two separate housing sections and the application tool are provided. The next step of the method according to the invention includes an insertion of the connection section of the application tool in one of the housing sections. Especially, the connection section is placed into the outlet channel, preferably at the second end of the outlet channel. In the next step the two housing sections are connected to each other to build the housing and simultaneously the outlet channel. Automatically, the connection section of the application tool and therefore the application tool as a whole is also fixed in the outlet channel of the housing. In other words, after this third step of a method according to the invention, a continuous channel is provided between the first end of the outlet channel and the outlet opening of the application tool. The last step of a method according to the invention comprises a sealing of the connection between the two housing sections. This sealing can be for instance provided by welding or gluing. A leaking of the fluid to be applicated and also a contamination of this liquid can therefore be prohibited.

Especially, a method according to the invention can be improved by that the housing sections and/or the application tool are produced in an injection molding process. Injection molding can be preferably be used, if the materials for the housing sections and the application tool are plastic. Injection molding is an especially fast and easy manufacturing method and therefore the production of an application device according to the invention in huge numbers can be provided more easily.

The present invention is further described hereinafter with reference to illustrated embodiments shown in the accompanying drawings. Elements of the same function are specified throughout the figures with the same reference signs. In the following, any statement made having regard to the direction of a component are made relative to the position shown in the drawing and can naturally vary in the actual position of application. The description of the accompanying drawings is only by the way of detail. Specific features of each aspect of the present invention and after figures can be combined with each other if of technical sense. The figures schematically show:
- Fig. 1: an application device in an unassembled state,
- Fig. 2: an application device in a partly assembled state,
- Fig. 3: an application device in its assembled state,
- Fig. 4: a first sectional view of an application device,
- Fig. 5: a second sectional view of an application device, and
- Fig. 6: a discharging device.

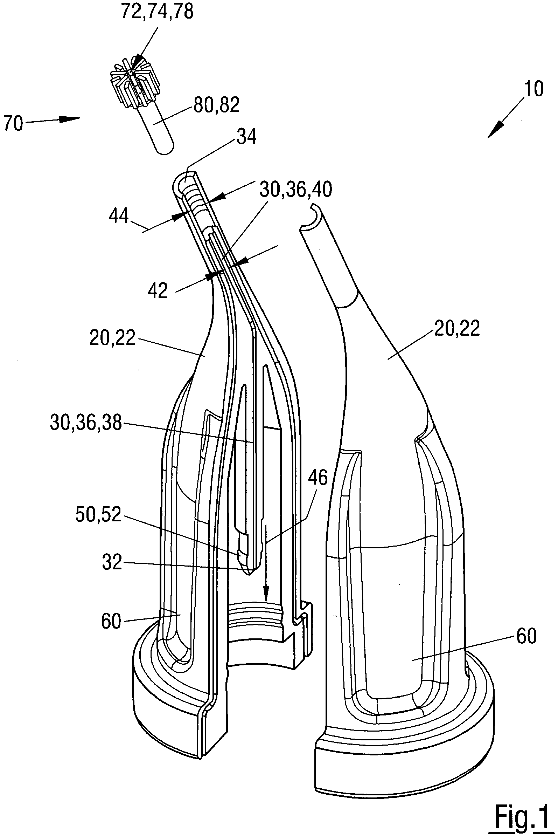

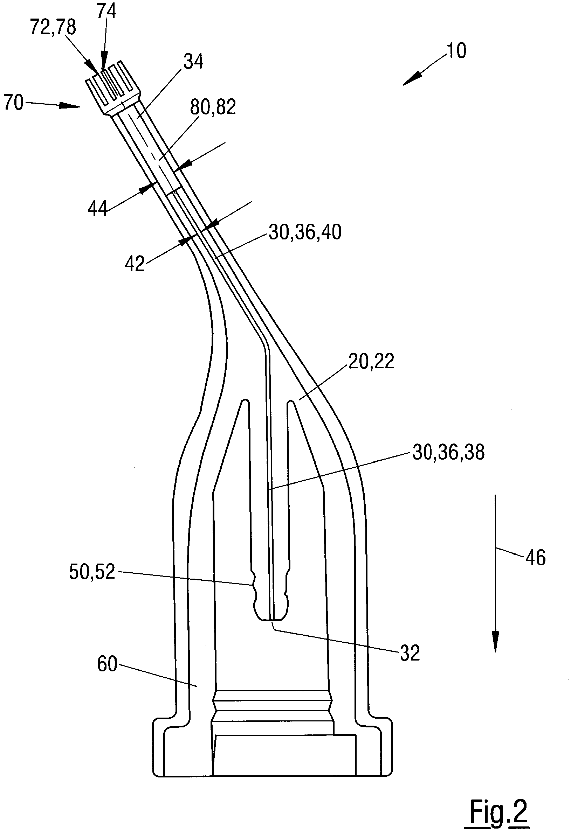

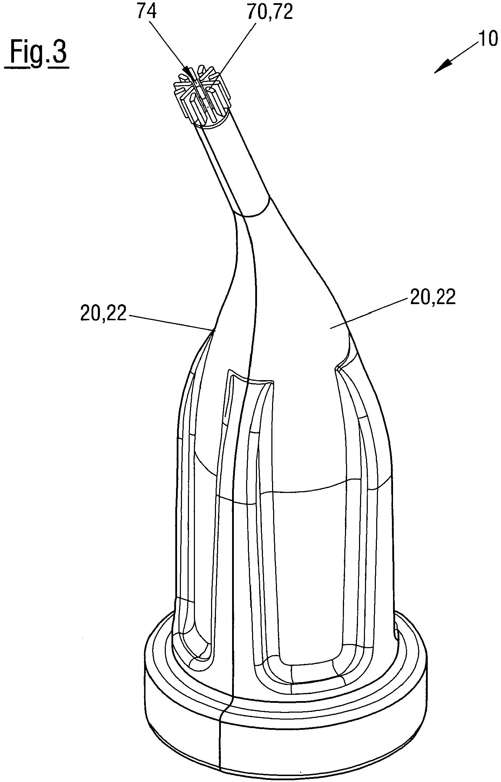

In the Figs. 1 to 3 an application device 10 according to the invention is shown in different views. Fig. 1 shows an unassembled state, Fig. 2 shows a partly assembled state and Fig. 3 an isometric view of an fully assembled state of the application device 10 according to the invention. In the following, these three Figures are therefore described together, wherein each Figure is addressed separately if necessary.

Fig. 1 shows the main components of an application device 10 according to the invention. The application device 10 comprises a housing 20 and an application tool 70. The housing 20 comprises two housing sections 22, which are, as shown in Fig. 1, preferably constructed as essentially mirror-symmetrical half shells. One of these housing sections 22 constructed as half shell is shown in Fig. 2.

The housing 20 further comprises an outlet channel 30 extending between a first end 32 and a second end 34. Especially, the outlet channel 30 can be build up by two linear channel sections 36, a proximal channel section 38 starting at the first end 32 and a distal channel section 40 ending at the second end 34. The two linear channel sections 36 are connected and obliquely run into each other. Therefore, the outlet channel 30 has a kinked configuration, allowing to reach otherwise unreachable target surfaces for the application of the fluid to be applicated.

Further on, at the distal channel section 40 a part of the outlet channel 30 comprises a larger diameter 44 than the remaining part of the outlet channel 30, which comprises a diameter 42. This allows in an especially easy way to place the connection section 80 of the application tool 70, arranged at a rear shaft 82 of the application tool 70 into this part of the outlet channel 30. This is also shown in Fig. 2.

Within the application tool 70 an application channel 76 (not shown), is arranged, whereby by placing the application tool 70 into the outlet channel 30 a continuous channel can be provided between the first end 32 of the outlet channel 30 and the outlet opening 74 of the application tool 70. This outlet opening 74 is placed at a distal end 78 of the application tool 70 and especially within an application tip 72. This application tip 72 and especially also the whole application tool 70 can be made out of a softer material than the housing 20 preventing harming of the target surface whereon the fluid is to be applicated.

Further on, the housing 20 comprises a shielding section 60. This shielding section 60 stand apart from the outlet channel 30 and surrounds the outlet channel 30, especially the first end 32 of the outlet channel 30. Especially, the shielding section 60 extends beyond the first end 32 of the outlet channel 30 in the direction 46 of the outlet channel 30. Therefore, a contamination of the first end 32 of the outlet channel 30, for instance via a manual contact, can be prohibited.

Additionally, the first end 32 of the outlet channel 30 comprises connection means 50 to connect an outlet port 92 of a discharging device 90 (not shown). Also by providing a sealing surface 52 on the connection means 50 an additional sealing between the application device 10 and the discharging device 90 can be provided.

To produce an application device 10 according to the invention first of all the two separate housing sections 22 and the application tool 70 are provided as shown in Fig. 1. Preferably some, especially all, parts of the application device 10 as shown in Fig. 1 are produced in an injection molding process. As a next step, the connection section 80 of the application tool 70 is inserted in one of the housing sections 22 as shown in Fig. 2. After connecting the two housing sections 22 which each other to build the housing 20 and the outlet channel 30, a sealing of the connection between the two housing sections 22 is carried out. The result is shown in Fig. 3. By connecting the two housing sections automatically the connection section 80 of the application tool 70 is fixed in the outlet channel 30. The sealing between the two housing sections 22 can be done by welding or gluing.

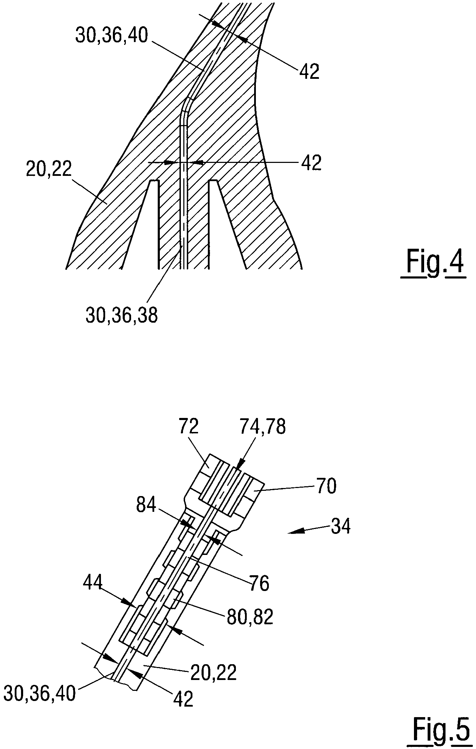

The Figs. 4 and 5 show sectional views of different parts of an application device 10 according to the invention. In Fig. 4 a sectional view of the housing 20 is shown. Especially, the kinked connection between the linear channel sections 36 of the outlet channel 30, where the proximal channel section 38 and the distal channel section 40 are running oblique to each other, is shown. It is clearly visible, that the diameter 42 throughout the outlet channel 30 is preferably constant.

Fig. 5 shows the second end 34 of the outlet channel 30. In this distal channel section 40 of the outlet channel 30, build up as a linear channel section 36, the connection section 80 of the application tool 70 is inserted. The connection section 80 is provided on a rear shaft 38 of the application tool 70. At the other end of the application tool 70 an application tip 72 is provided, forming the distal end 78 of the application tool 70, where also the outlet opening 74 is placed. Several diameters 42, 44, 84 are shown, whereby the diameters 42, 44 belongs to the outlet channel 30, the diameter 84 to the application channel 76 in the application tool 70. It is clearly visible, that the diameter 44 of the outlet channel 30 is larger than the diameter 42. The diameter 44 is provided in the part of the outlet channel 30, where the connection section 80 of the application tool 70 is arranged. An especially secure and good fixing of the application tool 70 in the outlet channel 30 of the housing 20 can therefore be provided. On the other hand, the diameter 42 of the outlet channel 30 in the remaining part of the outlet channel 30 and the diameter 84 of the application channel 76 are equal. This provides a channel for the fluid to be applicated between the first end 32 of the outlet channel (not shown) up to the outlet opening 74 of the application tool 70 with a constant diameter 42, 44. An especial easy flow of the fluid to be applicated can therefore be provided.

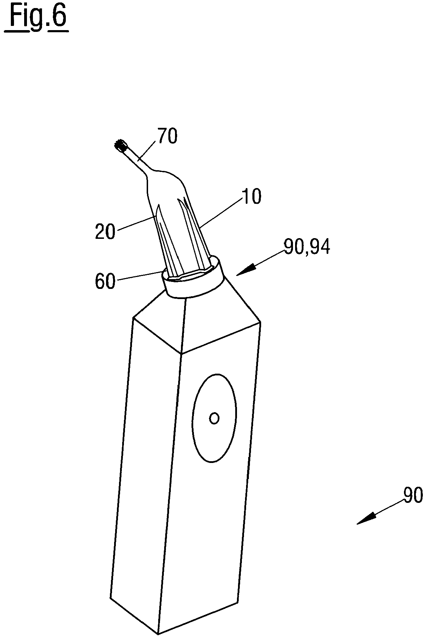

In Fig. 6 a discharging device 90 in combination with an application device 10 according to the invention is shown. At an outlet port 92, often providing a sealing area 94, the application device 10 is securely fixed, especially using the connection means 50 on the first end 32 of the outlet channel 30, concealed by the shielding section 60 of the housing 20. At the end of the application device 10 the application tool 70 is used to applicate the fluid to be applicated, wherein the discharging device 90 provides this fluid.

### List of references

- 10: application device

- 20: housing
- 22: housing section

- 30: outlet channel
- 32: first end
- 34: second end
- 36: linear channel section
- 38: proximal channel section
- 40: distal channel section
- 42: diameter
- 44: diameter
- 46: direction

- 50: connecting means
- 52: sealing surface

- 60: shielding section

- 70: application tool
- 72: application tip
- 74: outlet opening
- 76: application channel
- 78: distal end
- 80: connection section
- 82: shaft
- 84: diameter

- 90: discharging device
- 92: outlet port
- 94: sealing area

## Claims

1. An application device (10), in particular for dental compounds, comprising a housing (20) and an application tool (70);
the housing (20) comprising an outlet channel (30) extending through the housing (20) from a first end (32) of the outlet channel (30) to a second end (34) of the outlet channel (30); and the application tool (70) comprising an outlet opening (74) being connected to the outlet channel (30); **characterized in that**
the housing (20) comprises two separate housing sections (22) which are connected to each other to build the housing (20) and the outlet channel (30);
further that the application tool (70) is distinct from each of the housing sections (22) and comprises a connection section (80) which is fixedly arranged in the outlet channel (30), wherein the connection section (80) comprises an application channel (76) connecting the outlet channel (30) with the outlet opening (74);
further that the housing (20) comprises connecting means (50) arranged at the first end (32) of the outlet channel (30), the connecting means (50) being configured to connect the application device (10) to an outlet port (92) of a discharging device (90), in particular by inserting the connecting means (50) into the outlet port (92) of the discharging device (90); and
further that the housing (20) comprises a shielding section (60) standing apart from the outlet channel (30) and surrounding the outlet channel (30), wherein the shielding section (60) extends beyond the first end (32) of the outlet channel (30) in the direction (46) of the outlet channel (30).

2. The application device (10) of claim 1 wherein the outlet channel (30) has a curved or kinked configuration.

3. The application device (10) of claim 1 or 2, wherein the outlet channel (30) comprises two linear channel sections (36) which run obliquely to each other.

4. The application device (10) of claim 3, wherein the two linear channel sections (36) define a proximal channel section (38) and a distal channel section (40) and wherein the connection section (80) of the application tool (70) is arranged in the distal channel section (40), and in particular only in the distal channel section (40).

5. The application device (10) of any of the preceding claims, wherein the connecting means (50) comprises a sealing surface (52) for engaging a correspondent sealing area (94) of the discharging device (90) for providing a sealing.

6. The application device (10) of any of the preceding claims, wherein the part of the outlet channel (30) holding the connection section (80) of the application tool (70) has a diameter (44) which is greater than the diameter (42) of the outlet channel (30) in its remaining part.

7. The application device (10) of any of the preceding claims, wherein the diameter (84) of the application channel (76) is identical to the diameter (42) of the part of the outlet channel (30) not holding the connection section (80) of the application tool (70).

8. The application device (10) of any of the preceding claims, wherein each of the housing sections (22) is configured as a half shell, wherein in particular the half-shells are designed essentially mirror-symmetrical.

9. The application device (10) of any of the preceding claims, wherein the connection section (80) is configured as a shaft (82) of the application tool (70), in particular as a rear shaft (82).

10. The application device (10) of any of the preceding claims, wherein the housing sections (22) and/or the application tool (70) are made of plastic, wherein preferably the materials of the housing sections (22) are identical and/or the material of the application tool (70) is different from the material of the housing sections (22), in particular softer than the material of the housing sections (22).

11. The application device (10) of any of the preceding claims, wherein the application tool (70) has an application tip (72) provided at the distal end (78) of the connection section (80).

12. The application device (10) of any of the preceding claims, wherein the housing sections (22) are sealingly connected to each other.

13. The application device (10) of any of the preceding claims, wherein the connection section (80) of the application tool (70) is sealingly arranged in the outlet channel (30).

14. A method for producing an application device (10) according to any of the preceding claims,
**characterized by** the steps of
providing the two separate housing sections (22) and the application tool (70);
inserting the connection section (80) of the application tool (70) in one of the housing sections (22);
connecting the two housing sections (22) with each other to build the housing (20) and the outlet channel (30) thereby fixing the connection section (80) of the application tool (70) in the outlet channel (30);
sealing the connection between the two housing sections (22), e.g. by welding or gluing.

15. The method of claim 14, wherein the housing sections (22) and/or the application tool (70) are produced in an injection molding process.
